# EUROPÄISCHE PATENTSCHRIFT

(11) **EP 2 863 768 B1**
(45) Veröffentlichungstag und Bekanntmachung des Hinweises auf die Patenterteilung: **09.03.2016**
(21) Anmeldenummer: 14737265.0
(22) Anmeldetag: 10.07.2014
(51) Int. Cl.: A43C 15/16, C09J 5/06, A43B 5/02

(54) **SPORTSCHUH UMFASSEND STOLLEN ODER STOLLENAUFNAHMEN**
SPORTS SHOE COMPRISING STUDS OR STUD HOLDERS
CHAUSSURE DE SPORT COMPORTANT DES CRAMPONS OU DES LOGEMENTS DE CRAMPONS

(30) Priorität: 11.07.2013 DE 102013213582
(43) Veröffentlichungstag der Anmeldung: 29.04.2015
(73) Patentinhaber: Evonik Degussa GmbH, 45128 Essen (DE)
(72) Erfinder: GRUHN, Maximilian, 45770 Marl (DE); HÜLSMANN, Klaus, 45721 Haltern am See (DE); KUHMANN, Karl, 48249 Dülmen (DE); BEYER, Michael, 46348 Raesfeld (DE); RISTHAUS, Martin, 59399 Olfen (DE); SHI, Jun, Shanghai 200435 (CN)
(86) Internationale Anmeldenummer: PCT/EP2014/064831
(87) Internationale Veröffentlichungsnummer: WO 2015/004246

(56) Entgegenhaltungen:
- WO-A1-92/18027
- DE-A1- 19 817 579
- US-A- 6 050 006
- US-A1- 2004 159 020

## Beschreibung

Die vorliegende Erfindung betrifft einen Sportschuh umfassend Stollen oder Stollenaufnahmen sowie mindestens eine Kunststoffsohle, die entsprechenden Schuhsohlen, ihre Herstellung und Verwendung.

Im Stand der Technik ist bekannt, Sport- oder Wanderschuhe, und insbesondere Fußballschuhe mit Stollen zu versehen, um die Bodenhaftung des Schuhs, insbesondere auf weichem Untergrund wie z. B. Rasen zu erhöhen. Sie werden insbesondere bei allen auf Rasen gespielten Sportarten wie Fußball, Rugby, American Football, Baseball oder Ultimate eingesetzt.

Stollen sind Profilzapfen unter der Schuhsohle, wobei die Stollen je nach Anbringungsart in die Schuhsohle hineinragen können. Sie sind üblicherweise senkrecht, annähernd senkrecht, oder ggf. auch in Schrägstellung, zur Schuhsohlenebene ausgerichtet.

In der Sohle können statt der Stollen an sich auch Vorrichtungen eingebracht sein, die die Stollen aufnehmen (Stollenaufnahmen). Hierbei lassen sich die Stollen beispielsweise in die Aufnahmen hineinschrauben. Die Stollenaufnahmen werden auch als Stollenfuß bezeichnet.

Die Stollen können aus unterschiedlichen Materialien bestehen. Üblicherweise werden Stollen aus Metallen oder Kunststoffen eingesetzt. Die Stollen sind dabei üblicherweise über eine form- und/oder kraftschlüssige Verbindung mit der Sohle des Schuhs verbunden.

Nachteilig ist, dass zwischen den Stollen und der Sohle, die üblicherweise aus Kunststoffen gefertigt ist, keine ausreichende Haftung besteht. Unter Belastung können sich die Stollen aus der Sohle lösen oder sie können herausbrechen. Sofern die Stollen einer seitlichen Belastung (Biegebelastung) ausgesetzt sind, bildet sich zwischen Sohlenmaterial und Stollen ein Zwischenraum oder Spalt, in dem Verunreinigungen wie Gras oder Sand eindringen können. Dies führt neben einem verschlechterten Erscheinungsbild zu einer erhöhten Materialbelastung.

US 2004/159020 A1 beschreibt einen Sportschuh umfassend Stollen oder Stollenaufnahmen sowie eine Kunststoffsohle, wobei Stollen bzw. Stollenaufnehmen und Sohle durch Schmelzklebstoffe miteinander verbunden sind, die Epoxide enthalten.

Aufgabe der vorliegenden Erfindung war daher, einen Sportschuh umfassend Stollen bzw. Stollenaufnahmen sowie eine Kunststoffsohle (Stollenschuh) zur Verfügung zu stellen, die die Nachteile des Standes der Technik nicht aufweisen. Die Stollen sollten zur Sohle eine verbesserte Haftung aufweisen. Dadurch kann eine verbesserte Kraftübertragung bzw. -verteilung gewährleistet werden. Unter Biegebelastung sollte das Eindringen von Verunreinigungen unterbunden oder zumindest teilweise vermieden werden. Weiterhin sollte der Stollenschuh ein verringertes Gewicht bei zumindest gleichwertiger Haftung zeigen.

Überraschend wurden Sportschuhe gefunden, die die Nachteile des Standes der Technik nicht aufweisen. Demgemäß können Sportschuhe der eingangs erwähnten Art zur Verfügung gestellt werden, deren Stollen bzw. Stollenaufnahmen, vorzugsweise Stollen, und Sohlen zumindest durch eine Beschichtung einer Haftvermittler-Zusammensetzung miteinander verbunden sind, wobei die Zusammensetzung mindestens einen Schmelzklebstoff auf Copolyamid-Basis enthält. Hierbei sind die Stollen in ihrer Längsrichtung (Symmetrieachse) üblicherweise senkrecht, nahezu senkrecht (Auslenkung der Symmetrieachse: 85° bis < 90°) oder schräg (Auslenkung der Symmetrieachse 40° bis < 85°) zur Ebene der Sohle ausgebildet. Eine Schrägstellung der Stollen umfasst somit üblicherweise Winkel zwischen der Sohle und dem Lot zur Sohle von größer als 0° bis 50°.

Insofern ragt ein Teil der Stollen aus der Sohle heraus, um die beabsichtigte Bodenhaftung zu schaffen, und ein Teil ragt in die Sohle hinein, um den Verbund mit der Sohle zu bewirken.

Die erfindungsgemäßen Sportschuhe umfassen auch Aufnahmen für Stollen. Hierbei lassen sich die Stollen beispielsweise in die Aufnahmen hineinschrauben oder auf andere Weise, bspw. durch Magnetismus, befestigen. Die Aufnahmen sind durch mindestens eine Beschichtung einer Haftvermittler-Zusammensetzung mit der Sohle verbunden sind. Stollen und Stollenaufnahmen bilden das Stollenmaterial.

Die Stollenaufnahmen können auch dafür geeignet sein, um Schuhplatten, wie sie im Fahrradsport zur Verbindung mit einem Klickpedal eingesetzt werden, aufzunehmen.

Die Stollenaufnahmen können weiterhin Vorrichtungen von Skischuhen oder Skistiefeln für die Halterungen der Skibindung aufnehmen.

Weitere Ausgestaltungen der Erfindung ergeben sich aus den Unteransprüchen.

Die Kunststoff-Schuhsohlen der erfindungsgemäßen Sportschuhe umfassend Stollen bzw. Stollenaufnahmen bilden einen weiteren Gegenstand der Erfindung. Die erfindungsgemäßen Schuhsohlen bilden mit ggf. vorhandenen weiteren Sohlen wie Innen- oder Zwischensohlen den Boden eines Schuhs. Der zweite Hauptbestandteil des Schuhs ist der Schaft.

Ein weiterer Gegenstand der Erfindung ist ein Verfahren zur Herstellung der zuvor genannten Sportschuhe, wobei die Haftvermittler-Zusammensetzung zumindest teilweise auf die Oberfläche der Stollen oder Stollenaufnahmen aufgetragen wird und die Stollen bzw. Stollenaufnahmen anschließend mit dem die Sohle bildenden Kunststoff verbunden werden (Verfahren 1). In einem alternativen Verfahren wird die Haftvermittler-Zusammensetzung zumindest teilweise auf die Sohle aufgetragen und die Sohle anschließend mit den Stollen bzw. Stollenaufnahmen verbunden (Verfahren 2). Das Verfahren 1 stellt ein bevorzugtes Verfahren der Erfindung dar.

Der Auftrag der Haftvermittler-Zusammensetzung (im Folgenden auch als Zusammensetzung bezeichnet) kann vollflächig oder partiell auf die Stollen, die Stollenaufnahmen oder die Sohle, vorzugsweise auf Stollen bzw. Stollenaufnahmen, aufgebracht werden.

Das Stollenmaterial mit der applizierten Haftvermittler-Zusammensetzung kann thermisch vernetzt bzw. getrocknet werden, wobei Temperaturen von 80 °C bis 240 °C, vorzugsweise 120 °C bis 225 °C, bevorzugt 175 °C bis 220 °C, für einen Zeitraum von 0,5 min bis 20 min, vorzugsweise von 1 min bis 10 min, bevorzugt 3 min bis 8 min, vorteilhaft sind. Bei Walzverfahren sind Temperaturen von 150 °C bis 230 °C sowie Zeiten von 50 s bis 3 min bevorzugt.

Die Zusammensetzungen werden somit thermisch gehärtet.

Die Zusammensetzungen können kontinuierlich oder diskontinuierlich mittels Elektrotauchlackieren, elektrostatischen Sprühverfahren, Wirbelsintern, Walzen (zum Beispiel Coil Coating), Gießen, Spritzen und Sprühen, Laminieren, (Heiß-)Pressen, (Co-) Extrusion appliziert werden, wobei Sprüh-Verfahren und Walzenauftragsverfahren bevorzugt sind. Hierbei können die Zusammensetzungen ein- oder beidseitig, lokal oder vollflächig aufgebracht werden. Die eingebrannten Schichtdicken (Trockenschichtdicken) der Haftvermittler-Zusammensetzungen können 10 bis 1000 µm, vorzugsweise 20 bis 250 µm und bevorzugt 30 bis 150 µm betragen. Im Walzenverfahren sind Schichtdicken von 10 µm bis 50 µm bevorzugt.

Danach wird der Kunststoff der Schuhsohle beispielsweise durch einen Spritzgießprozess, Thermoformen oder durch Heißpressen hergestellt und gemäß Verfahren 1 auf das Stollenmaterial aufgebracht und das Stollenmaterial mit dem Kunststoff physikalisch und/oder chemisch verbunden. Der Spritzgießprozess und das Thermoformen sind bevorzugt.

Bei der Herstellung des erfindungsgemäßen Stollenschuhs liegt der Vorteil in einer verkürzten Prozesskette im Vergleich zu Verfahren des Standes der Technik, in denen ein Verkleben von Stollen bzw. Stollenaufnahmen in die bereits erstellte Sohle erfolgt (nachträgliches Verbinden). Ein nachträgliches Verbinden ist insbesondere beim Spritzgießprozess und dem Thermoformen nicht erforderlich.

Demzufolge stellt es eine bevorzugte Ausführungsform der Erfindung dar, die Stollen bzw. Stollenaufnahmen nicht nachträglich zu verbinden.

Besonders bevorzugt wird der Kunststoff mittels Spritzgusstechnologie eingespritzt. Hierzu wird das beschichtete Stollenmaterial in das Spritzgusswerkzeug eingelegt und nach dem Schließen des Werkzeugs mit dem Kunststoff hinter- oder überspritzt. Beim Kontakt der Kunststoffschmelze mit der beschichteten Stollenmaterialoberfläche bildet sich ein stoffschlüssiger Verbund bzw. die Haftung zwischen den Komponenten aus. Das stoffschlüssig verbundene Bauteil aus Schuhsohle und Stollen kann dann aus dem Spritzgießwerkzeug entformt und weiter ver- oder bearbeitet werden.

Durch die stoffschlüssige Verbindung zwischen Sohlenwerkstoff und Stollenmaterial kann eine deutlich günstige Kraftverteilung realisiert und in Folge dessen eine steifere Gesamtkonstruktion des Stollenaufbaus erzeugt werden. Zwischen Stollen und Sohle lagert sich eine geringere Verschmutzung an, so dass eine erhöhte Stabilität der Stollen gewährleistet ist. Unter Zugbelastung verhindert der Stoffschluss ein Herausziehen des Stollens. Die den Stollen umgebenden Bereiche der Stollen neigen zu einer geringeren Rissbildung.

Durch den stoffschlüssigen Verbund ergibt sich zudem der Vorteil der Gewichtsreduzierung, da durch die verbesserte Haftung im Gegensatz zu form- oder kraftschlüssigen Verbindungen eine geringere Fläche des Stollenmaterials mit der Sohle verbunden werden muss. Alternativ kann bei vergleichbarer Fläche ein steiferes Verformungsverhalten bzw. eine bessere Kraftübertragung Sohle-Stollen-Untergrund erhalten werden, da weniger Relativbewegung Stollen/Sohle zugelassen wird.

Anschließend kann die Kombination aus Stollenmaterial und Kunststoff für 2 min bis 90 min, vorzugsweise 5 min bis 60 min, bei 70 °C bis 230 °C zur Steigerung von Verbundhaftung und Vernetzungsgrad einer Wärmebehandlung unterzogen werden. Derartig hergestellte Bauteile aus Schuhsohle und Stollen weisen eine dauerhafte Verbindung zwischen dem vorbehandelten und beschichteten Stollenmaterial und dem Kunststoff auf und zeigen eine hohe mechanische und dynamische Belastbarkeit.

In analoger Weise bildet ein Verfahren zur Herstellung der erfindungsgemäßen Kunststoff-Schuhsohlen einen weiteren Gegenstand der Erfindung. Die Kunststoff-Schuhsohlen umfassend die Stollen oder Stollenaufnahmen können zur Herstellung der Sportschuhe verwendet werden, wobei der Fachmann mit der Herstellung vertraut ist.

Ein weiterer Gegenstand der Erfindung ist die Verwendung der erfindungsgemäßen Sportschuhe zum Wandern oder Klettern sowie bei Sportarten wie Fußball, Rugby, American Football, Golf, Leichtathletik, Baseball oder Ultimate, insbesondere auf Rasen, Kunstrasen, Asche oder Kunststoffbahnen wie Tartanbahnen eingesetzt werden. Ebenso können die Sportschuhe umfassen Stollenaufnahmen beim Radfahren als Fahrradschuh verwendet werden, sofern sie eine Aufnahmemöglichkeit für Schuhplatten aufweisen. Weiterhin können die Stollenschuhe als Steigeisen für vereiste oder glatte Oberflächen Verwendung finden. Darüber hinaus können die Sportschuhe umfassend Stollenaufnahmen beim Skifahren als Skischuhe oder Skistiefel verwendet werden, sofern sie eine Aufnahmemöglichkeit oder ein Verschlusssystem aufweisen, die für die Halterungen der Skibindung geeignet sind.

Vorzugsweise werden die Stollenschuhe bei Sportarten wie Fußball, Rugby, American Football, Golf, Leichtathletik, Baseball oder Ultimate, insbesondere auf Rasen, Kunstrasen, Asche oder Kunststoffbahnen wie Tartanbahnen, eingesetzt.

Eine ganz besonders bevorzugte Ausführungsform der Erfindung ist ein Sportschuh, dessen Stollen Metall umfassen und dessen Sohle durch einen Spritzgießprozess oder durch Thermoformen erhalten wird. Hierbei erfolgt kein nachträgliches Verbinden des Stollenmaterials mit der Sohle.

### Konversionsschicht

Vor der Applikation der Haftvermittler-Zusammensetzungen kann eine Konversionsschicht zur Vorbehandlung der Oberfläche auf das Stollenmaterial vollflächig oder partiell aufgebracht werden. Vorzugsweise erfolgt die Vorbehandlung bei metallischem Stollenmaterial. Das Stollenmaterial kann vor der Vorbehandlung gereinigt werden oder metallische Schutzüberzüge aufweisen. Die Metallreinigung ist dem Fachmann bekannt.

Die Vorbehandlung kann mit Konvertierungsmitteln erfolgen. Die Konvertierungsmittel werden üblicherweise als wässrige Lösungen eingesetzt. Als Konvertierungsmittel kommen handelsübliche Passivierungsmittel und Produkte für die Konversionsbehandlung in Frage, wie zum Beispiel Zinkphosphatierungsmittel, Eisenphosphatierungsmittel sowie phosphorsäurehaltige Lösungen enthaltend Titanate oder Zirconate. Chromatierungsmittel sind ebenfalls technisch denkbar, sie sind jedoch auf Grund ihrer gesundheitsgefährdenen Eigenschaften weniger bevorzugt.

Weiterhin kann die Konversionsschicht erhalten werden durch eine flammenpyrolytische Abscheidung von amorphem Silicat auf der Oberfläche des Stollenmaterials. Die zu behandelnde Oberfläche wird durch den oxidierenden Bereich einer Gasflamme geführt, in welche eine siliciumhaltige Substanz, der Precursor, eindosiert ist. Dieser verbrennt und der Rückstand scheidet sich als amorphes Silicat als festhaftende Schicht in Schichtdicken von etwa 20 bis 40 nm auf der Oberfläche ab.

Zur Behandlung einer Oberfläche wird aus einem Arbeitsgas ein Plasmastrahl oder aus einem Brenngas ein Flammstrahl erzeugt, mit dem die Oberfläche bestrichen wird, wobei mindestens ein Precursormaterial dem Arbeitsgas und/ oder dem Plasmastrahl oder dem Brenngas und/oder dem Flammstrahl zugeführt und im Plasmastrahl oder Flammstrahl zur Reaktion gebracht wird, wobei mindestens ein Reaktionsprodukt mindestens eines der Precursoren auf der Oberfläche und/oder auf mindestens einer auf der Oberfläche angeordneten Schicht abgeschieden wird. Ein derartiges Verfahren ist beispielsweise in DE-A-102009042103 beschrieben.

### Stollen und Stollenmaterial

Die Profilzapfen unter der Schuhsohle, die als Stollen fungieren, können beispielsweise zylinderförmig, quaderförmig, kegelförmig, kronenförmig oder dreieckig sein. Die Stollen können Durchbrüche, Sicken, Kavitäten, Vertiefungen oder Aufrauhungen aufweisen, in die der Kunststoff des Sohlenmaterials eingebracht werden kann. Hierdurch wird eine noch höhere Haftung zwischen Stollen und Sohle erreicht. Dornen von Spikes (Nagelschuhen), die beispielsweise in der Leichtathletik oder im Golfsport eingesetzt werden, bilden ebenfalls Stollen im Sinne der Erfindung.

Geeignetes Stollenmaterial wird aus Metallen und Kunststoffen ausgewählt. Vorzugsweise enthält das Stollenmaterial Metall oder besteht aus diesem.

Geeignete Kunststoffe als Stollenmaterial umfasst Thermoplaste, Duroplaste oder Elastomere. Die Kunststoffe können verstärkt sein (Verstärkungsstoffe), wobei glasfaser- (GF), kohlenstofffaser- (CF), aramidfaserverstärkte oder naturfaserverstärkte Kunststoffe bevorzugt sind. Zudem können die Kunststoffe Füllstoffe wie Talkum, Korund, MoS₂, Graphit, Quarz oder Kreide enthalten.

Sofern Kunststoffe als Stollenmaterial eingesetzt werden, sind diese vorzugsweise verschieden von dem Material der Kunststoffsohle.

Geeignete Metalle sind z. B. eisenhaltige Legierungen wie Stahl, Aluminium, Kupfer, Magnesium, Titan sowie Legierungen der zuvor genannten Metalle. Bevorzugte Metalle sind Stahl, Titan, Aluminium sowie Legierungen der zuvor genannten Metalle, besonders bevorzugt Stahl und Aluminium sowie Aluminium-Legierungen.

Bevorzugte Stähle sind unlegierte Stähle oder niedrig legierte Stähle nach DIN EN 10020.

Stähle mit einem Schutzüberzug sind besonders bevorzugt. Geeignete Überzüge sind beispielsweise Überzüge aus Zink, Nickel, Chrom, Aluminium-Silizium, Aluminium-Zink, Zink-Aluminium, Zink-Eisen oder Zink-Magnesium, wobei Aluminium-Silizium, Zink-Aluminium und Zink bevorzugt sind. Die Zusammensetzung der Überzüge ist beispielsweise definiert in der Broschüre "Schmelztauchveredeltes Band und Blech" des Stahl-Informations-Zentrums im Stahl-Zentrum, Düsseldorf, Deutschland, Ausgabe 2010.

Die Stollen können Multimaterialverbunde sein, bei denen der Kern des Stollens ein anderes Material umfasst als die Außenschicht. Exemplarisch könnte ein Stollen einen Metallkern und eine Kunststoff-Außenschicht aufweisen.

Das Material des Stollens und der Stollenaufnahme kann gleich oder verschieden sein.

Vor dem Aufbringen des Sohlen-Kunststoffs kann das Stollenmaterial beschnitten, umgeformt oder verformt werden. Die Um- bzw. Verformung kann vor oder nach dem Auftrag der Haftvermittler-Zusammensetzung erfolgen. Die Stollen können zur Verbesserung der form- oder kraftschlüssigen Haftung L-förmig sein oder ähnliche Verzweigungen innerhalb des Schuhsohlenmaterials aufweisen.

Bereiche der Metallstollen, die aus der Sohle herausragen, können zumindest teilweise mit Materialien wie Kunststoffen ummantelt sein.

Die Form, Größe, Länge, Anzahl und Anordnung der Stollen auf der Sohle unterliegt grundsätzlich keiner Beschränkung. Diese Eigenschaften orientieren sich insbesondere an dem Einsatzgebiet sowie den Spielregeln der jeweiligen Sportart. Der Fachmann ist mit derartigen Anforderungen vertraut.

### Kunststoffsohle

Das Aufbringen des Kunststoffs auf das beschichtete Metall kann in bekannter Weise, z. B. durch Spritzgießen, Pressen, Laminieren, Tiefziehen, oder (Co-)Extrudieren erfolgen. Vorzugsweise wird der Kunststoff mittels Spritzgusstechnologie eingespritzt. Das mit den Beschichtungen versehene Metall kann in einem Bereich von 50 °C bis 250 C vortemperiert sein, um die Temperatur im Kontaktbereich zum Kunststoff z. B. beim Überspritzen für eine gute Verbindung zwischen Haftvermittler und Kunststoff anzuheben.

Geeignete Kunststoffe enthalten z. B. Polybutylenterephthalate, Polyolefine, Polycarbonate, Polyurethane, aliphatische oder teilaromatische Polyamide, Kunststoffgemische enthaltend Polyamide, Styrolpolymere wie Acrylnitril-Butadien-Styrol, Polyalkyl(meth)acrylate wie Polymethylmethacrylat sowie Mischungen der vorgenannten Kunststoffe. Mischungen aus Polycarbonaten und Acrylnitril-Butadien-Styrol sind ebenfalls geeignet. Bevorzugt sind aliphatische oder teilaromatische Polyamide, Kunststoffgemische enthaltend Polyamide, Polybutylenterephthalate, Polyolefine sowie Mischungen der zuvor genannten Kunststoffe, wobei Polyamide besonders bevorzugt sind. Die Kunststoffe können verstärkt sein (Verstärkungsstoffe), wobei glasfaser- (GF), kohlenstofffaser- (CF), aramidfaser- oder naturfaserverstärkte Kunststoffe bevorzugt und wobei glasfaser- oder kohlenstofffaserverstärkte Kunststoffe besonders bevorzugt sind. Zudem können die Kunststoffe Füllstoffe wie Talkum oder Kreide enthalten.

Bevorzugte Polyamide werden ausgewählt aus der Gruppe bestehend aus Polyamid 6, Polyamid 6-3T, Polyamid 6.6, Polyamid 610, Polyamid 612, Polyamid 613, Polyamid 1010, Polyamid 11, Polyamid 12, Polyamid 1012, Polyphthalamiden, optischen transparenten Polyamiden, Blockpolyetheramiden oder Mischungen sowie Copolymere auf Basis dieser Polyamide. Besonders bevorzugte Polyamide sind ausgewählt aus Polyamid 6, Polyamid 6.6, Polyamid 610, Polyamid 1010, Polyamid 11, Polyamid 12, Polyamid 1012, Blockpolyetheramiden sowie deren Mischungen. Die Polyamide können Verstärkungsstoffe, Füllstoffe oder Mischungen dieser Stoffe enthalten. Geeignete Polyamide werden beispielsweise unter der Bezeichnung VESTAMID EX9200 von der Fa. Evonik Industries AG angeboten.

Geeignete Blockpolyetheramide werden beispielsweise in EP-A-1693415 beschrieben.

Optisch transparente Polyamide umfassen mikrokristalline Polyamide enthaltend lineare aliphatische Dicarbonsäuren und cycloaliphatische Diamine, amorphe Polyamide enthaltend lineare aliphatische Dicarbonsäuren und cycloaliphatische Diamine und optional Lactame bzw. Aminocarbonsäuren, amorphe Polyamide enthaltend Terephthalsäure und cycloaliphatische oder verzweigte aliphatische Diamine und optional Lactame bzw. Aminocarbonsäuren oder amorphe Polyamide enthaltend Isophthalsäure und cycloaliphatische oder lineare oder verzweigte aliphatische Diamine und optional Lactame bzw. Aminocarbonsäuren. Geeignete optisch transparente Polyamide sind beispielsweise Amide aus Dodecandisäure und einem Isomerengemisch des 4,4'-Bis(aminocyclohexyl)-methans, aus Terephthalsäure und dem Isomerengemisch des 2,2,4- und 2,4,4-Trimethylhexamethylendiamins, aus Dodecandisäure und dem Isomerengemisch des 3-,3'-Dimethyl- 4,4'-bis(aminocyclohexyl)-methans, aus Laurinlactam, Isophthalsäure und dem Isomerengemisch des 3-,3'-Dimethyl- 4,4'-bis(aminocyclohexyl)-methans oder aus Tetradecandisäure und dem Isomerengemisch des 3-,3'-Dimethyl- 4,4'-bis(aminocyclohexyl)-methans. Derartige Polyamide werden beispielsweise in DE-A-102007062063 oder WO-A-2008025729 beschrieben. Die optisch transparenten Polyamide können in Mischungen oder als Copolyamide eingesetzt werden. Optisch transparente Polyamide werden beispielsweise unter den Handelsnamen Trogamid (Evonik Industries AG, Deutschland), Grilamid (EMS-Chemie, Schweiz), Rilsan (Arkema, Frankreich) oder Durethan (Lanxess, Deutschland) angeboten. Geeignete optisch transparente Polyamide sind beispielsweise Trogamid CX7323, Trogamid CX9704, Gilamid, TR90, Grilamid TR55 oder RILSAN Clear.

### Haftvermittler-Zusammensetzung

Die Haftvermittler-Zusammensetzung enthält mindestens einen Schmelzklebstoff auf Copolyamidbasis. Die Haftvermittler-Zusammensetzung kann in Lösung, in Dispersion oder als Feststoff vorliegen.

Der Schmelzklebstoff enthält mindestens ein Copolyamid. Das Copolyamid ist aus Amid-Monomeren und Comonomeren herstellbar. Durch die Comonomere werden vorzugsweise Copolyamide erhalten, die einen Schmelzpunkt zwischen 95 °C und 175 °C aufweisen.

Die Amid-Monomeren sind vorzugsweise ausgewählt sind aus der Gruppe bestehend aus Laurinlactam, Amionoundecansäure oder Mischungen daraus. Copolyamide auf Basis von Laurinlactam sind besonders bevorzugt.

Die Comonomere werden vorzugsweise ausgewählt aus aliphatischen oder cycloaliphatischen Diaminen, aliphatischen oder cycloaliphatischen Dicarbonsäuren, Lactamen und Mischungen daraus. Die Comonomere enthalten, unabhängig voneinander, vorzugsweise 4 bis 18 C-Atome. Geeignete Dicarbonsäuren sind beispielsweise Adipinsäure, Sebazinsäure oder Dodecandisäure. Geeignete Diamine stellen beispielsweise Hexamethylendiamin, Decamethylendiamin oder Dodecamethylendiamin dar. Lactame wie Caprolactam können ebenfalls als Comonomer eingesetzt werden.

Bevorzugte Comonomere sind Caprolactam und ein Polymer aus Adipinsäure und Hexamethylendiamin, vorzugsweise in einem Massenverhältnis von 1 : 1.

Durch einen Überschuss an Amingruppen der Diamine resultieren Copolyamide mit reaktiven Aminoendgruppen.

Die Copolyamide weisen vorzugsweise Aminzahlen von 75 bis 400 mmol/kg auf.

Das gewichtsmittlere Molekulargewicht der Copolyamide ist vorzugsweise in einem Bereich von 15000 bis 70000 g/mol anzufinden (gemessen mittels Gelpermeationschromatographie (GPC) gegen einen Polystyrolstandard). Die relative Lösungsviskosität beträgt vorzugsweise 1,2 bis 1,8 (Bestimmung nach ISO 307).

Die Copolyamide bzw. der Schmelzklebstoff können in den Zusammensetzungen in Lösung, in Dispersion oder in Pulverform eingesetzt werden, wobei die Pulverform bevorzugt ist. Ein geeignetes Lösemittel ist beispielsweise m-Kresol.

Die Pulverform kann beispielsweise durch Vermahlen erhalten werden, wobei der Korndurchmesser vorzugsweise < 200 µm, bevorzugt < 100 µm und besonders bevorzugt < 70 µm ist.

In einer bevorzugten Ausführungsform der Erfindung sind dem Copolyamid mindestens eine Epoxidkomponente und mindestens ein blockiertes Polyisocyanat als weitere Bestandteile des Schmelzklebers zugesetzt.

Als Epoxidkomponente können beispielsweise Verbindungen auf Basis von Diolen, Polyolen oder Dicarbonsäuren eingesetzt werden, wobei Diole bevorzugt und entsprechende Phenol-Diol-Derivate besonders bevorzugt sind. Ganz besonders bevorzugte Phenol-Diol-Derivate sind Bisphenole, insbesondere Bisphenol A. Die Epoxidkomponente wird üblicherweise erhalten durch Umsetzung mit Epichlorhydrin. Typischerweise weist die Epoxidkomponente einen Epoxy-Index von 1-2 Eq/kg auf. Das Epoxid-Äquivalenzgewicht liegt vorzugsweise zwischen 875 und 1000 g/mol. Die Dichte kann 1,1 bis 1,3 kg/L, vorzugsweise 1,15 bis 1,25 kg/L betragen. Die Glasübergangstemperatur ist üblicherweise im Bereich von 40 bis 60 °C, vorzugsweise 45 bis 55 °C angesiedelt. Der Schmelzklebstoff enthält die Epoxidkomponente vorzugsweise in einem Anteil von 2,5 bis 10 Gew.-%, bevorzugt 4 bis 6 Gew.-%, jeweils bezogen auf das Gesamtgewicht des Schmelzklebstoffs.

Der Anteil an blockiertem Polyisocyanat beträgt vorzugsweise 2,5 bis 15 Gew.-%, bevorzugt 4 bis 6 Gew.-%, jeweils bezogen auf das Gesamtgewicht des Schmelzklebstoffs.

Die blockierte Polyisocyanatkomponente kann aromatisch, aliphatisch oder cycloaliphatisch sein, wobei aliphatische oder cycloaliphatische Polyisocyanate bevorzugt sind. Blockierungsmittel für Isocyanate wie Oxime, Phenole oder Caprolactam sind dem Fachmann bekannt. Bevorzugt liegt die Polyisocyanatkomponente als Uretdion vor, um blockiert zu sein. Typische Beispiele werden unter der Bezeichnung VESTAGON von Evonik Industries AG, Deutschland, vertrieben.

Die Haftvermittler-Zusammensetzung kann selbst- oder fremdvernetzende Bindemittel enthalten (zu dem Begriff "Bindemittel" vgl. Römpp Lexikon Lacke und Druckfarben, Georg Thieme Verlag, Stuttgart, New York, 1998, Bindemittel, Seiten 73 und 74). Im Rahmen der vorliegenden Erfindung bezeichnet der Begriff "selbstvernetzend" die Eigenschaft eines Bindemittels, mit sich selbst Vernetzungsreaktionen einzugehen. Voraussetzung hierfür ist, dass in den Bindemitteln komplementäre reaktive funktionelle Gruppen enthalten sind, die miteinander reagieren und so zu einer Vernetzung führen. Oder aber die Bindemittel enthalten reaktive funktionelle Gruppe die "mit sich selbst" reagieren. Als fremdvernetzend werden dagegen solche Bindemittel-Systeme bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, Härtung, Seiten 274 bis 276, insbesondere Seite 275, unten, verwiesen.

Die Haftvermittler-Zusammensetzung kann weiterhin elektrisch leitfähige Stoffe enthalten, die ausgewählt sind aus Graphit, Ruß, Zinkstaub oder Mischungen dieser Stoffe, wodurch elektrisch leitfähige Haftvermittler-Zusammensetzungen entstehen.

Die Metallstollen umfassend Beschichtungen elektrisch leitfähiger Haftvermittler-Zusammensetzungen können mit einer kathodischen Tauchlackierung (KTL) versehen werden.

Die Haftvermittler-Zusammensetzungen können weiterhin Farbmittel, vorzugsweise Pigmente, enthalten. Darüber hinaus können funktionelle Pigmente wie Korrosionsschutzpigmente enthalten sein.

Geeignete Schmelzkleber werden beispielsweise von der Firma Evonik Industries AG, Deutschland, unter der Bezeichnung VESTAMELT angeboten. Beispielsweise seien die Typen X1027-P1, X1038-P1, X1316-P1 und X1333-P1 genannt.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele

Die Haftung der Stollen in einer Kunststoffsohle wurde simuliert durch Metallstreifen, die zunächst mit Haftvermittler-Zusammensetzungen appliziert wurden. Anschließend wurden die beschichteten Metallstreifen mit verschiedenen Kunststoffen überspritzt und die Haftung zwischen Metall und Kunststoff untersucht. Der Kunststoff wurde auf den Metallstreifen einseitig (Versuchsreihe I) oder zweiseitig (Versuchsreihe II) überspritzt.

### I. Prüfkörper mit einseitiger Kunststoffbeschichtung

### Aufbau: Metall - Haftvermittler-Zusammensetzung - Kunststoff

Unvorbehandelte Blechplatten (Blechstärke 1,5 mm) wurden per Konvertierungsmittel phosphatiert. Als Konvertierungsmittel wurde Granodine 958 A der Firma Henkel, Deutschland, enthaltend unter anderem Phosphorsäure und Zinkbis(dihydrogenphosphat) und eine Nachpassivierung aus Deoxylyte 54NC eingesetzt. Als Blechwerkstoff wurden folgende Metalllegierungen verwendet:
M1: Aluminium 5754 H111
M2: Edelstahl 1.4516
M3: verzinkter Stahl DX51 D Z140 nach DIN EN 10346
M4: Stahl ZSTE 800 nach DIN EN10142

Nach dem Aufbringen der Konversionslösung gemäß Herstellerangabe mittels Tauchen in die Lösungen und Trocknen der Schichten wurden die Metallproben mit einer Haftvermittler-Zusammensetzung beschichtet. Als Zusammensetzung wurden appliziert
H1: Schmelzklebstoff auf Copolyamidbasis (Vestamelt X1333-P1 der Fa. Evonik Industries AG), enthaltend eine Epoxidkomponente und ein blockiertes Polyisocyanat als Pulverbeschichtung und
H2: Lösemittelhaltiger Sprühlack enthaltend ca. 30 Gew.-% eines Schmelzklebstoffs auf Copolyamidbasis, enthaltend eine Epoxidkomponente und ein blockiertes Polyisocyanat, und
H3: Schmelzklebstoff auf Copolyamidbasis (Vestamelt Z2366-P1 der Fa. Evonik Industries AG), enthaltend eine Epoxidkomponente und ein blockiertes Polyisocyanat sowie ein funktionalisiertes Polyolefin als Pulverbeschichtung.

Die Zusammensetzungen H1, H2 und H3 enthalten das gleiche Copolyamid. Die Zusammensetzung H2 (Sprühlack) wurde im Sprühverfahren mit einer Schichtdicke von 50 - 70 µm und die Zusammensetzungen H1 und H3 elektrostatisch mit einer Schichtstärke von 50 - 100 µm aufgetragen. Zusammensetzung H2 wurde für 5 min bei 175 °C und die Pulverbeschichtung für 5 min bei 200°C eingebrannt. Die beschichteten Bleche wurden hierzu in einen vorgeheizten Autoklaven (Ofen) gelegt.

Nach dem Einbrennvorgang wurden die Blechtafeln mit einer Schlagschere in, für die Spritzgusskavität passende, Blechstreifen mit den Maßen 24,9 mm x 59,8 mm (Toleranz ±0,2 mm) oder 20,0 mm x 50,0 mm (Toleranz +0 -0,2 mm) geschnitten.

Die Blechstreifen wurden dann zur Herstellung der endgültigen Prüfkörper in ein temperiertes Spritzgießwerkzeug eingelegt und mit einem thermoplastischen Kunststoff überspritzt. Als Kunststoffkomponente wurden folgende Formmassen eingesetzt:
K1: VESTAMID LX9012 der Fa. Evonik Industries AG
K2. TROGAMID CX7323 der Fa. Evonik Industries AG
K3: VESTAMID Terra HS1850 der Fa. Evonik Industries AG
K4: VESTAMID Terra BS1429 der Fa. Evonik Industries AG
K5: Durethan BKV30 H2.0 der Fa. LANXESS Deutschland GmbH
K6: Celstran PP-GF30-05CN01 der Fa. TICONA
K7: VESTAMID HTplus M1035 der Fa. Evonik Industries AG
K8: VESTAMID L-GF30 der Fa. Evonik Industries AG.

Die Verarbeitung des Kunststoffs erfolgte auf einer Typ Allrounder 420 (Schneckendurchmesser 25 mm) bei einer Massetemperatur von 280 °C, einer Werkzeugtemperatur von 80 °C und bei einer Einspritzgeschwindigkeit von ca. 30 ccm/s. Für das PPAGF50 bzw. PPLGF30 wurden jedoch Werkzeugtemperaturen von 120 °C bzw. 70 °C und Massetemperaturen von 335 °C bzw. 270 °C eingesetzt. Wichtig war hierbei eine Einspritzverzögerung von ca. 30 s vorzusehen, damit der eingelegte Blechstreifen auf Werkzeugtemperatur vorgewärmt werden konnten, wodurch die Haftung positiv begünstigt wurde. Nach dem Entformen wurden die einzelnen Zug-Scher-Probekörper vom Anguss getrennt.

Die eingesetzten Probekörper besaßen folgen Gestaltungsmerkmale:

| **Typ** | **Länge in mm** | **Breite in mm** | **Überlappung in mm²** | **Dicke des Metallblechs in mm** | **Dicke der Kunststoffkomponente in mm** |
|---|---|---|---|---|---|
| 1 | 130 | 25 | 25 × 25 | 1 | 4 |
| 2 | 130 | 25 | 12,5 × 25 | 1 | 4 |
| 3 | 100 | 20 | 20 × 20 | 1,5 | 6 (4mm im Überlappungsbereich) |

Die so erzeugten Prüfkörper wurden bei 50 % relativer Luftfeuchte für mindestens für 24 h bei 23 °C gelagert, um einen einheitlichen Konditionierungszustand zu gewährleisten. Die Probekörper wurden anschließend in eine Standard-Zugprüfmaschine Zwick/Roell Z-020 eingespannt und mit einer Geschwindigkeit von 5 mm/min bei 23 °C mit einem Abstand von ca. 15 mm / Seite zwischen den Klemmen und dem Überlappungsbereich geprüft.

| **Kunststoff** | **Metall** | **Haftvermittler** | **Probekörper** | **Haftung in MPa** |
|---|---|---|---|---|
| K1 | M1 | ohne | 25×25 | 0 |
| K1 | M1 | H1 | 25×25 | 4,5 |
| K1 | M2 | ohne | 25×25 | 0 |
| K1 | M2 | H1 | 25×25 | 4,6 |
| K2 | M3 | ohne | 25×25 | 0 |
| K2 | M3 | H1 | 25×25 | 4,8 |
| K2 | M3 | H2 | 25×25 | 3,7 |
| K3 | M1 | ohne | 12,5×25 | 0 |
| K3 | M1 | H1 | 12,5×25 | 11,3 |
| K3 | M1 | H2 | 12,5×25 | 14,7 |
| K3 | M3 | ohne | 12,5×25 | 0 |
| K3 | M3 | H1 | 12,5×25 | 16,0 |
| K3 | M3 | H2 | 12,5×25 | 15,5 |
| K4 | M1 | ohne | 12,5×25 | 0 |
| K4 | M1 | H2 | 12,5×25 | 7,9 |
| K4 | M3 | ohne | 12,5×25 | 0 |
| K4 | M3 | H2 | 12,5×25 | 15,7 |
| K5 | M1 | ohne | 12,5×25 | 0 |
| K5 | M1 | H1 | 12,5×25 | 13,0 |
| K5 | M1 | H2 | 12,5×25 | 13,9 |
| K5 | M3 | ohne | 12,5×25 | 0 |
| K5 | M3 | H1 | 12,5×25 | 13,8 |
| K5 | M3 | H2 | 12,5×25 | 12,3 |
| K6 | M1 | ohne | 12,5×25 | 0 |
| K6 | M1 | H3 | 12,5×25 | 5,8 |
| K7 | M3 | Ohne | 12,5×25 | 1 |
| K7 | M3 | H2 | 12,5×25 | 11,9 |
| K8 | M4 | ohne | 20×20 | 0 |
| K8 | M4 | H1 | 20×20 | 8,8 |
| K8 | M4 | H2 | 20×20 | 10,6 |

Die Ergebnisse zeigen, dass durch den Stoffschluss mittels Haftvermittlerbeschichtung eine erhöhte Haftfestigkeit zwischen Kunststoff und Metall erreicht werden kann als in formschlüssigen Prüfkörpern ohne Haftvermittler.

### II. Prüfkörper mit beidseitiger Kunststoffbeschichtung

### Aufbau: Kunststoff - Haftvermittler-Zusammensetzung - Metall - Haftvermittler-Zusammensetzung - Kunststoff

Im Vergleich zum Versuchsaufbau I wurde der Kunststoff auf beiden Seiten des Metallblechs aufgebracht. Hierdurch resultierten Prüfkörper, die von drei Seiten mit Kunststoff umgeben waren; der Kunststoff bildete sich dabei U-förmig um das Metallblech aus

Es wurden unvorbehandelte Blechplatten aus Stahl (verzinkter Stahl DX51 D Z140 nach DIN EN 10346) per Konvertierungsmittel phosphatiert. Als Konvertierungsmittel wurde Granodine 958 A der Firma Henkel, Deutschland, enthaltend unter anderem Phosphorsäure und Zinkbis(dihydrogenphosphat), eingesetzt.

Nach dem Aufbringen der Konversionslösung gemäß Herstellerangabe mittels Tauchen in die Lösungen und Trocknen der Schichten wurden die Metallproben mit einer Haftvermittler-Zusammensetzung beschichtet. Als Zusammensetzung wurden appliziert
- H1: VESTAMELT X1333 als Pulverbeschichtung,
- H2: Lösemittelhaltiger Sprühlack enthaltend ca. 30 Gew.-% VESTAMELT X 1333.

Die Zusammensetzung H2 (Sprühlack) wurde im Sprühverfahren mit einer Schichtdicke von 50 - 70 µm und die Zusammensetzung H1 elektrostatisch mit einer Schichtstärke von 50 - 100 µm aufgetragen. Zusammensetzung H2 wurde für 5 min bei 175 °C und die Pulverbeschichtung für 5 min bei 200 °C eingebrannt. Die beschichteten Bleche wurden hierzu in einen vorgeheizten Autoklaven (Ofen) gelegt.

Nach dem Einbrennvorgang wurden die Blechtafeln mit einer Schlagschere in, für die Spritzgusskavität passende, Blechstreifen mit den Maßen 20,0 mm x 50,0 mm (Toleranz ±0,2 mm) geschnitten.

Die Blechstreifen wurden dann zur Herstellung der endgültigen Prüfkörper in ein temperiertes Spritzgießwerkzeug eingelegt und mit einem thermoplastischen Kunststoff überspritzt. Als Kunststoffkomponente wurde ein Polyamid 6 GF30 (Durethan BKV30 H2.0 der Firma Lanxess, Deutschland) eingesetzt. Die Verarbeitung des Kunststoffs erfolgte auf einer Arburg Spritzgießmaschine Typ V370 bei einer Massetemperatur von 280 °C, einer Werkzeugtemperatur von 80 °C und bei einer Einspritzgeschwindigkeit von ca. 30 ccm/sec. Wichtig war hierbei eine Einspritzverzögerung von ca. 15 sec vorzusehen, damit der eingelegte Blechstreifen auf Werkzeugtemperatur vorgewärmt werden konnte, wodurch die Haftung positiv begünstigt wurde. Mögliche Überlappungslängen zwischen Kunststoff und Metall, die mit dem Werkzeug hergestellt werden können, betragen 10 x 20 mm. Nach dem Entformen wurden die einzelnen Zug-Scher-Probekörper vom Anguss getrennt.

Die so erzeugten Prüfkörper wurden bei 50 % relativer Luftfeuchte für mindestens für 24 h bei 23 °C gelagert, um einen einheitlichen Konditionierungszustand zu gewährleisten. Die Probekörper werden dann in eine Standard-Zugprüfmaschine Zwick/Roell Z-020 und mit einer Geschwindigkeit von ca. 5 mm/min bei 23 °C mit einem Überlappungsbereich von ca. 15mm / Seite.

| **Kunststoff** | **Haftvermittler** | **Haftung in MPa** |
|---|---|---|
| K1 | ohne | 1,6 |
| K1 | H1 | 21,4 |
| K1 | H2 | 18,2 |

Die Ergebnisse zeigen, dass durch den Stoffschluss mittels Haftvermittlerbeschichtung eine erhöhte Haftfestigkeit zwischen Kunststoff und Metall erreicht werden kann als in formschlüssigen Prüfkörpern ohne Haftvermittler

## Patentansprüche

1. Sportschuh umfassend Stollen oder Stollenaufnahmen sowie ein Kunststoffsohle, wobei die Stollen oder die Stollenaufnahmen (Stollenmaterial) und die Kunststoffsohle zumindest durch eine Beschichtung einer Haftvermittler-Zusammensetzung miteinander verbunden sind, wobei die Haftvermittler-Zusammensetzung mindestens einen Schmelzklebstoff enthält, **dadurch gekennzeichnet, dass** ein Schmelzklebstoff auf Copolyamid-Basis eingesetzt wird.

2. Sportschuh nach Anspruch 1, **dadurch gekennzeichnet, dass** dem Copolyamid mindestens eine Epoxidkomponente und mindestens ein blockiertes Polyisocyanat als weitere Bestandteile des Schmelzklebers zugesetzt sind.

3. Sportschuh nach einem der vorherigen Ansprüche, **dadurch gekennzeichnet, dass** die Stollen in ihrer Längsrichtung senkrecht, nahezu senkrecht oder schräg zur Ebene der Kunststoffsohle ausgebildet sind.

4. Sportschuh nach einem der vorherigen Ansprüche, **dadurch gekennzeichnet, dass** die Stollen ein Material umfassen oder daraus bestehen, das ausgewählt ist aus Metall und Kunststoff.

5. Sportschuh nach einem der vorherigen Ansprüche, **dadurch gekennzeichnet, dass** die Kunststoffsohle durch einen Spritzgießprozess, durch Thermoformen oder durch Heißpressen auf das Stollenmaterial aufgebracht wird.

6. Kunststoff-Schuhsohle umfassend Stollen oder Stollenaufnahmen, **dadurch gekennzeichnet, dass** die Stollen oder die Stollenaufnahmen und die Kunststoff-Schuhsohle zumindest durch eine Beschichtung einer Haftvermittler-Zusammensetzung miteinander verbunden sind, wobei die Zusammensetzung mindestens einen Schmelzklebstoff enthält, **dadurch gekennzeichnet, dass** ein Schmelzklebstoff auf Copolyamid-Basis eingesetzt wird.

7. Verfahren zur Herstellung eines Sportschuhs oder einer Kunststoff-Schuhsohle nach einem der vorherigen Ansprüche, **dadurch gekennzeichnet, dass** die Haftvermittler-Zusammensetzung zumindest teilweise auf die Oberfläche der Kunststoff-Schuhsohle aufgetragen wird und die Kunststoff-Schuhsohle anschließend mit dem Stollenmaterial verbunden wird.

8. Verfahren zur Herstellung eines Sportschuhs oder einer Kunststoff-Schuhsohle nach einem der vorherigen Ansprüche, **dadurch gekennzeichnet, dass** die Haftvermittler-Zusammensetzung zumindest teilweise auf die Oberfläche des Stollenmaterials aufgetragen wird und das Stollenmaterial anschließend mit dem die Kunststoff-Schuhsohle bildenden Kunststoff verbunden werden.

9. Verfahren nach Anspruch 8, **dadurch gekennzeichnet, dass** die Haftvermittler-Zusammensetzung thermisch gehärtet wird.

10. Verfahren nach einem der Ansprüche 8 oder 9, **dadurch gekennzeichnet, dass** der Kunststoff der Kunststoff-Schuhsohle durch einen Spritzgießprozess, durch Thermoformen oder durch Heißpressen auf das Stollenmaterial aufgebracht wird.

11. Verwendung eines Sportschuhs umfassend Stollen oder Stollenaufnahmen nach einem der Ansprüche 1 bis 5 zum Wandern, Klettern oder als Sportschuh für die Sportarten Fußball, Rugby, American Football, Golf, Baseball, Ultimate, Radfahren, Skisport oder Leichtathletik.

12. Verwendung eines Sportschuhs nach Anspruch 11, **dadurch gekennzeichnet, dass** die Sportschuhe für Sportarten, die auf Rasen, Kunstrasen, Asche oder Kunststoffbahnen ausgetragen werden, eingesetzt werden.

## Claims

1. Sports shoe comprising studs or stud receivers, and also a plastics sole, where the studs or the stud receivers (stud material) and the plastics sole are connected to one another at least by a coating of an adhesion promoter composition, where the adhesion promoter comprises at least one hot-melt adhesive, **characterized in that** a copolyamide-based hot-melt adhesive is used.

2. Sports shoe according to Claim 1, **characterized in that** the copolyamide comprises additions of at least one epoxy component and of at least one blocked polyisocyanate, as other constituents of the hot-melt adhesive.

3. Sports shoe according to either of the preceding claims, **characterized in that** the longitudinal direction of the studs is perpendicular, almost perpendicular, or at an angle, to the plane of the plastics sole.

4. Sports shoe according to any of the preceding claims, **characterized in that** the studs comprise, or consist of, a material selected from metal and plastic.

5. Sports shoe according to any of the preceding claims, **characterized in that** the plastics sole is applied by an injection-moulding process, by thermoforming or by hot pressing onto the stud material.

6. Plastics shoe sole comprising studs or stud receivers, **characterized in that** the studs or the stud receivers and the plastics shoe sole are connected to one another at least by a coating of an adhesion promoter composition, where the composition comprises at least one hot-melt adhesive, **characterized in that** a copolyamide-based hot-melt adhesive is used.

7. Process for the production of a sports shoe or of a plastics shoe sole according to any of the preceding claims, **characterized in that** the adhesion promoter composition is applied at least to some extent to the surface of the plastics shoe sole and the plastics shoe sole is then connected to the stud material.

8. Process for the production of a sports shoe or of a plastics shoe sole according to any of the preceding claims, **characterized in that** the adhesion promoter composition is applied at least to some extent to the surface of the stud material and the stud material is then connected to the plastic that forms the plastics shoe sole.

9. Process according to Claim 8, **characterized in that** the adhesion promoter composition is cured thermally.

10. Process according to Claim 8 or 9, **characterized in that** the plastic of the plastics shoe sole is applied by an injection-moulding process, by thermoforming or by hot pressing onto the stud material.

11. Use of a sports shoe comprising studs or stud receivers according to any of Claims 1 to 5 for hiking or climbing or as a sports shoe for the following sports: football, rugby, American football, golf, baseball, ultimate, cycling, skiing or athletics.

12. Use of a sports shoe according to Claim 11, **characterized in that** the sports shoes are used for sports which take place on natural or synthetic turf, or cinders, or synthetic tracks.

## Revendications

1. Chaussure de sport comportant des crampons ou des logements de crampons ainsi qu'une semelle en matière plastique, dans laquelle les crampons ou les logements de crampons (matériau des crampons) et la semelle en matière plastique sont assemblés les uns aux autres au moins par une couche d'une composition d'agent adhésif, dans laquelle la composition d'agent adhésif contient au moins une colle fusible, **caractérisée en ce que** l'on utilise une colle fusible à base de copolyamide.

2. Chaussure de sport selon la revendication 1, caractérisée en ce l'on a ajouté au copolyamide au moins un composant époxyde et au moins un polyisocyanate bloqué comme autres constituants de la colle fusible.

3. Chaussure de sport selon l'une quelconque des revendications précédentes, **caractérisée en ce que** les crampons sont configurés avec leur direction longitudinale perpendiculaire, presque perpendiculaire ou oblique par rapport au plan de la semelle en matière plastique.

4. Chaussure de sport selon l'une quelconque des revendications précédentes, **caractérisée en ce que** les crampons comprennent un matériau, ou en sont composés, qui est choisi parmi un métal et une matière plastique.

5. Chaussure de sport selon l'une quelconque des revendications précédentes, **caractérisée en ce que** la semelle en matière plastique est déposée sur le matériau des crampons par un procédé de coulée par injection, par thermoformage ou par pressage à chaud.

6. Semelle de chaussure en matière plastique comportant des crampons ou des logements de crampons, **caractérisée en ce que** les crampons ou les logements de crampons et la semelle de chaussure en matière plastique sont assemblés les uns aux autres au moins par une couche d'une composition d'agent adhésif, dans laquelle la composition contient au moins une colle fusible, **caractérisée en ce que** l'on utilise une colle fusible à base de copolyamide.

7. Procédé de fabrication d'une chaussure de sport ou d'une semelle de chaussure en matière plastique selon l'une quelconque des revendications précédentes, **caractérisé en ce que** l'on dépose la composition d'agent adhésif au moins en partie sur la surface de la semelle de chaussure en matière plastique et on assemble ensuite la semelle de chaussure en matière plastique au matériau des crampons.

8. Procédé de fabrication d'une chaussure de sport ou d'une semelle de chaussure en matière plastique selon l'une quelconque des revendications précédentes, **caractérisé en ce que** l'on dépose la composition d'agent adhésif au moins en partie sur la surface du matériau des crampons et on assemble ensuite le matériau des crampons à la matière plastique formant la semelle de chaussure en matière plastique.

9. Procédé selon la revendication 8, **caractérisé en ce que** l'on durcit thermiquement la composition d'agent adhésif.

10. Procédé selon l'une des revendications 8 ou 9, **caractérisé en ce que** l'on dépose la matière plastique de la semelle de chaussure en matière plastique sur le matériau des crampons par un procédé de coulée par injection, par thermoformage ou par pressage à chaud.

11. Utilisation d'une chaussure de sport comportant des crampons ou des logements de crampons selon l'une quelconque des revendications 1 à 5 pour la marche, l'escalade, ou comme chaussure de sport pour la pratique du football, du rugby, du football américain, du golf, du baseball, de l'ultimate, du cyclisme, du ski ou de l'athlétisme léger.

12. Utilisation d'une chaussure de sport selon la revendication 11, **caractérisée en ce que** les chaussures de sport sont utilisées pour la pratique de disciplines sportives, qui se pratiquent sur le gazon, le gazon artificiel, la cendrée ou des pistes synthétiques.
